(19) Europäisches Patentamt
European Patent Office
Office européen des brevets

(11) **EP 4 135 113 A1**

(12) **EUROPEAN PATENT APPLICATION**
published in accordance with Art. 153(4) EPC

(43) Date of publication:
**15.02.2023 Bulletin 2023/07**

(21) Application number: **21789255.3**

(22) Date of filing: **14.04.2021**

(51) International Patent Classification (IPC):
***H01M 50/449*** *(2021.01)* ***H01M 50/446*** *(2021.01)*
***H01M 10/052*** *(2010.01)*

(52) Cooperative Patent Classification (CPC):
**H01M 10/052; H01M 50/446; H01M 50/449;**
Y02E 60/10

(86) International application number:
**PCT/KR2021/004722**

(87) International publication number:
**WO 2021/210922 (21.10.2021 Gazette 2021/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.04.2020 KR 20200045488**

(71) Applicants:
- **LG Energy Solution, Ltd.**
  **Seoul 07335 (KR)**
- **Ulsan National Institute of Science and Technology**
  **Ulju-gun, Ulsan 44919 (KR)**

(72) Inventors:
- **KIM, Ji-Eun**
  **Daejeon 34122 (KR)**
- **SUNG, Dong-Wook**
  **Daejeon 34122 (KR)**
- **LEE, Sang-Young**
  **Ulju-gun, Ulsan 44919 (KR)**
- **SEO, Ji-Young**
  **Ulju-gun, Ulsan 44919 (KR)**
- **LEE, Yong-Hyeok**
  **Ulju-gun, Ulsan 44919 (KR)**
- **LEE, Je-An**
  **Daejeon 34122 (KR)**

(74) Representative: **Hoffmann Eitle**
**Patent- und Rechtsanwälte PartmbB**
**Arabellastraße 30**
**81925 München (DE)**

# (54) SEPARATOR FOR ELECTROCHEMICAL DEVICE AND METHOD FOR MANUFACTURING SAME

(57) The present disclosure relates to a separator for an electrochemical device provided with a porous coating layer including multiple types of binder resins, and a method for manufacturing the same. The separator shows high adhesion between an electrode and the separator, even when any separate adhesive layer is not disposed on the surface of the separator. In addition, the separator shows higher adhesion to an electrode, as compared to a separator using a fluorinated binder resin, such as polyvinylidene fluoride, used conventionally in the art. Therefore, when introducing the separator to a battery, it is possible to manufacture an electrode assembly under a mild temperature and pressure condition, to improve the productivity of assemblage, to reduce defect generation, and thus to increase the yield. In addition, since the separator has no separate adhesive layer, it is possible to realize low interfacial resistance between the separator and an electrode. Further, the separator shows high affinity to an electrolyte, as compared to a semi-crystalline polymer, such as a fluorinated binder resin, and thus improves the output characteristics of a battery.

FIG. 1

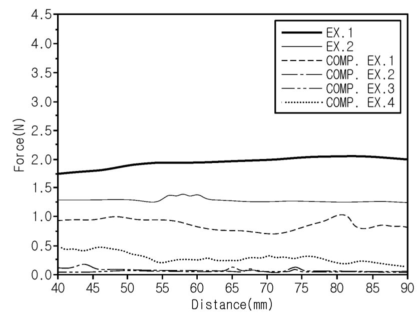


EP 4 135 113 A1

## Description

### TECHNICAL FIELD

The present application claims priority to Korean Patent Application No. 10-2020-0045488 filed on April 14, 2020 in the Republic of Korea. The present disclosure relates to a separator used for an electrochemical device, such as a secondary battery, and a method for manufacturing the same.

### BACKGROUND ART

As technological development and needs for mobile instruments have been increased, secondary batteries as energy sources have been in rapidly increasingly in demand. Recently, use of secondary batteries as power sources for electric vehicles (EV), hybrid electric vehicles (HEV), or the like, have been realized. Accordingly, active studies have been conducted about secondary batteries capable of meeting various needs. Particularly, there is a high need for lithium secondary batteries having high energy density, high discharge voltage and output stability. More particularly, it is required for lithium secondary batteries used as power sources for electric vehicles and hybrid electric vehicles to have high output characteristics so that they may realize a high output in a short time. A polyolefin-based microporous film used conventionally as a separator for an electrochemical device shows a severe heat shrinking behavior at a temperature of 100°C or higher due to its material property and a characteristic during its manufacturing process, including orientation, thereby causing a short-circuit between a positive electrode and a negative electrode. To overcome such problems, recently, there has been applied a separator having a porous coating layer including a mixture containing inorganic particles and a binder polymer on at least one surface of a separator substrate, such as a polyolefin-based microporous membrane, having a plurality of pores. In general, the binder polymer used for the porous coating layer includes a PVdF-based binder resin including vinylidene as a polymerization unit. However, when using such a PVdF-based binder resin, there is a limitation in realization of high adhesive property. Therefore, there is a need for developing a binder resin composition suitable for a binder resin of a porous coating layer of a separator.

### DISCLOSURE

### Technical Problem

The present disclosure is designed to solve the problems of the related art, and therefore the present disclosure is directed to providing a separator for an electrochemical device which has improved adhesion to an electrode and shows a low shrinkage, and a method for manufacturing the same. The present disclosure is also directed to providing a binder resin composition used for the separator. It will be easily understood that the objects and advantages of the present disclosure may be realized by the means shown in the appended claims and combinations thereof.

### Technical Solution

According to the first embodiment of the present disclosure, there is provided a separator for an electrochemical device which includes a porous separator substrate and a porous coating layer formed on the surface of the substrate,

wherein the porous coating layer includes inorganic particles and a binder resin at a weight ratio of about 50:50-99:1,
the binder resin includes a first binder resin and a second binder resin,
the first binder resin is an ethylenic polymer resin having a glass transition temperature (Tg) of 30-60°C and comprising a polar group, and
the second binder resin is an acrylic binder resin having a glass transition temperature (Tg) of 80-120°C.

According to the second embodiment of the present disclosure, there is provided the separator for an electrochemical device as defined in the first embodiment, wherein the binder resin further includes a third binder resin, which is a polymer of a polymerization unit having at least one selected from acrylate, acetate and nitrile groups.

According to the third embodiment of the present disclosure, there is provided the separator for an electrochemical device as defined in the first or the second embodiment, wherein the first binder resin is present in an amount of 50-90 wt% based on 100 wt% of the binder resin, and the second binder resin is present in an amount of 10-50 wt% based on 100 wt% of the binder resin.

According to the fourth embodiment of the present disclosure, there is provided the separator for an electrochemical device as defined in any one of the first to the third embodiments, wherein the third binder resin is present in an amount of 7 wt% or less based on 100 wt% of the binder resin.

According to the fifth embodiment of the present disclosure, there is provided the separator for an electrochemical device as defined in any one of the first to the fourth embodiments, wherein the first polymer resin has a molecular weight (Mw) of 100,000-500,000 and includes polyvinyl acetate (PVAc) represented by the following Chemical Formula 1:

[Chemical Formula 1]

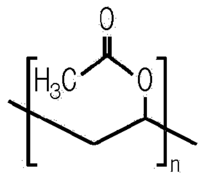

wherein n is an integer of 1 or more.

According to the sixth embodiment of the present disclosure, there is provided the separator for an electrochemical device as defined in any one of the first to the fifth embodiments, wherein the second polymer resin includes polymethyl methacrylate (PMMA) represented by the following Chemical Formula 2:

[Chemical Formula 2]

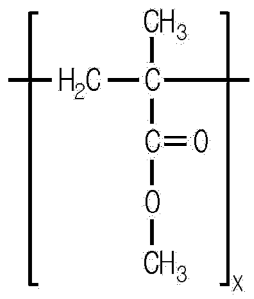

wherein x is an integer of 1 or more.

According to the seventh embodiment of the present disclosure, there is provided the separator for an electrochemical device as defined in any one of the second to the sixth embodiments, wherein the third binder resin is a polymer comprising trimethylolpropane triacrylate as a polymerization unit.

According to the eighth embodiment of the present disclosure, there is provided a separator for an electrochemical device which includes a porous separator substrate and a porous coating layer formed on the surface of the substrate,

wherein the porous coating layer includes inorganic particles and a binder resin at a weight ratio of about 50:50-99:1,
the binder resin includes a first binder resin, a second binder resin and a third binder resin,
the first binder resin has a glass transition temperature (Tg) of 30-60°C and includes polyvinyl acetate (PVAc),
the second binder resin has a glass transition temperature (Tg) of 80-120°C and includes polymethyl methacrylate (PMMA), and
the third binder resin includes a polymer comprising trimethylolpropane triacrylate as a polymerization unit.

According to the ninth embodiment of the present disclosure, there is provided an electrochemical device including a positive electrode, a negative electrode and a separator interposed between the positive electrode and the negative electrode, wherein the separator is the same as defined in any one of the first to the eighth embodiments.

According to the tenth embodiment of the present disclosure, there is provided a lithium-ion secondary battery including the electrochemical device as defined in the ninth embodiment.

Advantageous Effects

The separator obtained by using the binder resin composition according to the present disclosure shows high adhesion between an electrode and the separator, even when any separate adhesive layer is not disposed on the surface of the separator. In addition, the separator shows higher adhesion to an electrode, as compared to a separator using a

fluorinated binder resin, such as polyvinylidene fluoride, used conventionally in the art. Therefore, when introducing the separator according to the present disclosure to a battery, it is possible to manufacture an electrode assembly under a mild temperature and pressure condition, to improve the productivity of assemblage, to reduce defect generation, and thus to increase the yield. In addition, since the separator according to the present disclosure has no separate adhesive layer, it is possible to realize low interfacial resistance between the separator and an electrode. Further, the separator shows high affinity to an electrolyte, as compared to a semi-crystalline polymer, such as a fluorinated binder resin, and thus improves the output characteristics of a battery.

## DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

FIG. 1 shows the result of evaluation of the adhesion of the separator according to Examples and that of Comparative Examples.
FIG. 2 shows the result of determination of the peel strength of the separator specimen obtained according to Comparative Example 2.
FIG. 3 shows the result of evaluation of the shrinkage of each of the separators according to Examples 1 and 2.
FIG. 4a, FIG. 4b, FIG. 4c and FIG. 4d show the scanning electron microscopic (SEM) images of the separator surfaces of Examples 2-4 and Comparative Example 4, respectively.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.
Throughout the specification, the expression ‘a part includes or comprises an element’ does not preclude the presence of any additional elements but means that the part may further include the other elements.
As used herein, the terms ’approximately’, ’substantially’, or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.
As used herein, the expression ‘A and/or B’ means ’A, B or both of them’.
Unless otherwise stated, temperature is expressed in the unit of a Celsius degree, and content or content ratio is expressed on the weight basis.
The terms, ’top’, ’bottom’, ’left’ and ’right’ represent positions or directions in drawings to which reference is made, and are not used for limitary purposes.
Specific terms used in the following description are for the convenience of description and understanding, and the scope of the present disclosure is not limited thereto. Such terms include the above-listed words, derivatives thereof and synonyms thereof.
The present disclosure relates to a binder resin composition used for manufacturing a separator. The present disclosure also relates to a separator including the binder resin composition. In addition, the present disclosure relates to a method for manufacturing the separator. As used herein, ’separator using the binder resin composition’ refers to a separator obtained by using the above-mentioned binder resin composition.
Herein, the electrochemical device is a system in which chemical energy is converted into electrical energy through electrochemical reactions, has a concept including a primary battery and a secondary battery, wherein the secondary battery is capable of charging and discharging and has a concept covering a lithium-ion battery, a nickelcadmium battery, a nickel-hydrogen battery, or the like.
According to the present disclosure, the separator functions as an ion-conducting barrier which allows ions to pass therethrough, while interrupting an electrical contact between a negative electrode and a positive electrode. The separator has a plurality of pores formed therein, and the pores are interconnected preferably so that gases or liquids

may pass from one surface of the substrate to the other surface of the substrate.

According to an embodiment of the present disclosure, the separator includes a porous separator substrate including a polymer material, and a porous coating layer formed on at least one surface of the substrate, wherein the porous coating layer includes inorganic particles and a binder resin. In the porous coating layer, the inorganic particles are bound to one another by means of the binder resin, and may have a porous structure including pores derived from the interstitial volumes formed among the inorganic particles.

The porous coating layer includes a binder resin and inorganic particles, has a plurality of micropores therein, wherein the micropores are interconnected with one another, and shows structural characteristics as a porous layer through which gases or liquids pass from one surface to the other surface. According to an embodiment of the present disclosure, the porous coating layer includes the binder resin and inorganic particles at a weight ratio of 50:50-1:99. The ratio may be controlled suitably within the above-defined range. For example, the binder resin may be present in an amount of 50 wt% or less, 40 wt% or less, or 30 wt% or less, based on 100 wt% of the combined weight of the binder resin and inorganic particles. In addition, within the above-defined range, the binder resin may be present in an amount of 1 wt% or more, 5 wt% or more, or 10 wt% or more. According to the present disclosure, the porous coating layer preferably has a porous structure with a view to ion permeability. According to an embodiment of the present disclosure, when the content of the binder resin is less than 1 wt%, the adhesion between the separator and an electrode is not sufficient. When the content of the binder resin is excessively high, porosity may be degraded, and the battery using the separator shows increased resistance to cause degradation of the electrochemical characteristics of the battery.

According to an embodiment of the present disclosure, in the porous coating layer, the inorganic particles are bound to one another and integrated with one another by means of a polymer resin, wherein the interstitial volumes among the inorganic particles may form pores. As used herein, 'interstitial volume' means a space defined by the inorganic particles facing each other substantially in a closely packed or densely packed structure of the inorganic particles.

According to an embodiment of the present disclosure, the porous coating layer may have a porosity of 40-70 vol%. Within the above-defined range, the porosity may be 40 vol% or more, or 45 vol% or more. In combination with this or independently from this, the porosity may be 70 vol% or less, or 65 vol% or less. Considering ion conductivity, i.e. in order to ensure a sufficient path through which ions can pass, the porosity may be controlled to 40 vol% or more. In addition, in order to ensure heat resistance and adhesiveness, the porosity may be controlled to 65 vol% or less. Therefore, considering such electrochemical characteristics, the porosity of the porous coating layer may be controlled suitably within the above-defined range.

Meanwhile, according to the present disclosure, the porous coating layer may have a total thickness controlled suitably within a range of 1-10 $\mu$m. The total thickness of the porous coating layer is the sum of the thicknesses of the porous coating layers formed on the surfaces of all sides of the separator substrate. If a porous coating layer is formed merely on one surface of the separator surface, the thickness of the porous coating layer may satisfy the above-defined range. If porous coating layers are formed on both surfaces of the separator substate, the sum of the thicknesses of both porous coating layers may satisfy the above-defined range. When the thickness of the porous coating layer is less than 1 $\mu$m, it is not possible to obtain a sufficient effect of improving heat resistance due to an excessively small amount of inorganic particles comprised in the porous coating layer. Meanwhile, when the thickness of the porous coating layer is excessively thicker than the above-defined range, the separator has a large thickness, thereby making it difficult to manufacture a thin battery and to improve the energy density of a battery.

Meanwhile, according to an embodiment of the present disclosure, the porous coating layer includes inorganic particles and a binder resin.

According to an embodiment of the present disclosure, the porous coating layer includes inorganic particles and a binder resin. According to the present disclosure, the binder resin includes a first binder resin and a second binder resin. According to the present disclosure, the binder resin may further include a third binder resin. In the binder resin, the first binder resin may be present in an amount of about 50-90 wt%. The first binder resin shows a relatively low glass transition temperature (Tg). Thus, when the content of the first binder resin is larger than 90 wt%, it is possible to obtain high adhesion partially, but it is difficult to ensure uniform adhesion throughout the whole surface of the separator. In addition, the separators obtained by using such an excessive amount of the first binder resin show a deviation in adhesion, thereby making it difficult to ensure uniform reproducibility. On the contrary, when the content of the first binder resin is less than 50 wt%, it is difficult to realize high adhesion characteristics due to such a low amount of the first binder resin.

Meanwhile, the second binder resin may be present in an amount of 10-50 wt%. The second binder resin shows a relatively higher glass transition temperature as compared to the first binder resin. Therefore, when the second binder resin is used within the above-defined range, it is possible to solve the problem of non-uniform adhesion caused by such a relatively low Tg of the first binder resin.

Meanwhile, the third binder resin may be present in an amount of about 7 wt% or less, preferably 6 wt% or less, or 5 wt% or less, based on 100 wt% of the binder resin. It is possible to enhance the effect of improving adhesion through the addition of the third binder resin. However, when the third binder resin is introduced in an excessive amount, viscosity is increased to cause degradation of phase separation, and thus a desired level of adhesion may not be ensured.

Therefore, it is preferred to control the third binder resin within the above-defined range in order to ensure suitable adhesion and to prevent an increase in viscosity.

The first binder resin may include an ethylenic polymer resin comprising a polar group. According to an embodiment of the present disclosure, the first binder resin has a glass transition temperature (Tg) of 30-60°C. Meanwhile, the first binder resin may have a molecular weight (Mw) of 100,000-500,000. According to an embodiment of the present disclosure, the ethylenic polymer resin comprising a polar group may include polyvinyl acetate (PVAc) represented by the following Chemical Formula 1:

[Chemical Formula 1]

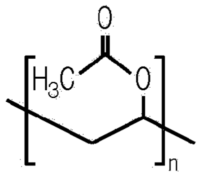

wherein n is an integer of 1 or more.

The second binder resin includes an acrylic binder resin, and the acrylic binder resin has a glass transition temperature (Tg) of 80-120°C. When the second binder resin has a glass transition temperature lower than the drying temperature as described hereinafter, the binder resin may be distributed non-homogeneously, and for example, the binder resin may be distributed in such a manner that it may be concentrated locally in the porous coating layer. On the contrary, when the glass transition temperature is higher than 120°C, since it is higher than the temperature applied to the electrode-separator lamination process as described hereinafter, it is difficult to ensure a desired level of adhesion. Meanwhile, the first binder resin may have a molecular weight (Mw) of 100,000-500,000. According to an embodiment of the present disclosure, the acrylic binder resin may include a C1-C8 alkyl acrylate and/or alkyl methacrylate as a monomer. Particular examples of the alkyl acrylate include at least one selected from methyl acrylate, ethyl acrylate, isopropyl acrylate, n-butyl acrylate, isobutyl acrylate, cyclohexyl acrylate and 2-ethylhexyl acrylate. In addition, particular examples of the alkyl methacrylate include at least one selected from methyl methacrylate, ethyl methacrylate, isopropyl methacrylate, n-butyl methacrylate, isobutyl methacrylate, cyclohexyl methacrylate and 2-ethylhexyl methacrylate. According to an embodiment of the present disclosure, polymethyl methacrylate (PMMA) may be used as the second binder resin. Herein, PMMA may be represented by the following Chemical Formula 2:

[Chemical Formula 2]

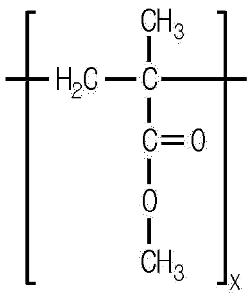

wherein x is an integer of 1 or more.

Meanwhile, according to an embodiment of the present disclosure, the third binder resin is a polymer of a polymerization unit having at least one functional group selected from acrylate, acetate and nitrile groups. According to an embodiment of the present disclosure, the polymerization unit may include a multifunctional acrylate monomer. According to another embodiment of the present disclosure, the third binder resin may include a polymer of any one multifunctional acrylate monomer or at least two multifunctional acrylate monomers. According to an embodiment of the present disclosure, the third binder resin may have various forms, including an alternating polymer in which polymerization units are distributed alternately, a random polymer in which polymerization units are distributed randomly, or a graft polymer in which a part of units is grafted. Non-limiting examples of the multifunctional acrylate monomer include trimethylolpropane ethoxylate triacrylate, trimethylpropane triacrylate, trimethylolpropane propoxylate triacrylate, polyethylene glycol dimethacrylate, polyethylene glycol diacrylate, polyester dimethacrylate, trimethylolpropane triacrylate, trimethylolpropane trimethacrylate, ethoxylated bis phenol A dimethacrylate, tetraethylene glycol diacrylate, 1,4-butanediol diacrylate, 1,6- hexandiol diacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, or the like. Such multifunctional acrylate monomers may be used alone or in combination. According to an embodiment of the present disclosure, the polymerization unit may include trimethylolpropane triacrylate, and the third binder resin may include a polymer comprising trimethylolpropane triacrylate as a polymerization unit.

According to an embodiment of the present disclosure, the polymerization unit may include trimethylolpropane ethoxylate triacrylate, independently from trimethylolpropane triacrylate or in combination with trimethylolpropane triacrylate. In addition, the third binder resin may include a polymer comprising trimethylolpropane ethoxylate triacrylate as a polymerization unit.

Meanwhile, as described hereinafter, the third binder resin may be introduced to slurry for forming a porous coating layer in the form of a polymerization unit forming the third binder resin, i.e. in the form of a monomer, and may be incorporated to the porous coating layer in the manner of polymerization of monomers during a process for forming a porous coating layer.

As described hereinafter, the third binder resin in the finished separator is a polymer of the above-mentioned polymerization units and functions to supplement the adhesion of the first and the second binders.

According to the present disclosure, the term ‘molecular weight’ refers to weight average molecular weight (Mw). According to an embodiment of the present disclosure, the molecular weight (Mw) may be determined by using gel permeation chromatography (GPC). For example, 200 mg of a polymer resin to be analyzed is diluted in 200 mL of a solvent, such as tetrahydrofuran (THF), to prepare a sample having a concentration of about 1000 ppm, and the molecular weight may be determined by using an Agilent 1200 series GPC instrument at a flow rate of 1 mL/min through a refractive index (RI) detector.

In addition, besides the first to the third binder resins, the porous coating layer may further include at least one fourth binder resin selected from the group consisting of a vinylidene-containing fluorinated binder resin, polyvinyl pyrrolidone, polyethylene oxide, polyarylate, cyanoethyl pullulan, cyanoethyl polyvinyl alcohol, cyanoethyl cellulose, cyanoethyl sucrose and pullulan, if necessary. The fourth binder resin may be present in an amount of 10 wt% or less, 5 wt% or less, or 1 wt% or less, based on 100 wt% of the total weight of the binder resins comprised in the porous coating layer.

According to an embodiment of the present disclosure, there is no particular limitation in the inorganic particles, as long as they are electrochemically stable. In other words, there is no particular limitation in the inorganic particles that may be used herein, as long as they cause no oxidation and/or reduction in the range (e.g. 0-5 V based on $Li/Li^+$) of operating voltage of an applicable electrochemical device. Particularly, when using inorganic particles having a high dielectric constant as inorganic particles, it is possible to improve the ion conductivity of an electrolyte by increasing the dissociation degree of an electrolyte salt, such as a lithium salt, in a liquid electrolyte.

For the above-mentioned reasons, the inorganic particles may be inorganic particles having a dielectric constant of 5 or more, preferably 10 or more. Non-limiting examples of the inorganic particles having a dielectric constant of 5 or more may include at least one selected from the group consisting of $BaTiO_3$, $Pb(Zr,Ti)O_3$ (PZT), $Pb_{1-x}La_xZr_{1-y}Ti_yO_3$ (PLZT, wherein $0 < x < 1$, $0 < y < 1$), $Pb(Mg_{1/3}Nb_{2/3})O_3PbTiO_3$ (PMN-PT), hafnia ($HfO_2$), $SrTiO_3$, $SnO_2$, $CeO_2$, MgO, $Mg(OH)_2$, NiO, CaO, ZnO, $ZrO_2$, $SiO_2$, $Y_2O_3$, $Al_2O_3$, SiC, $Al(OH)_3$, AlOOH and $TiO_2$.

In addition, inorganic particles having lithium-ion transportability, i.e. inorganic particles comprising lithium elements, and not storing lithium but transporting lithium ions, may be used as inorganic particles. Non-limiting examples of the inorganic particles having lithium-ion transportability include lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$-based glass ($1 < x < 4$, $0 < y < 13$), such as $14Li_2O$-$9Al_2O_3$-$38TiO_2$-$39P_2O_5$, lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$), such as $Li_{3.25}Ge_{0.25}P_{0.75}S_4$, lithium nitride ($Li_xN_y$, $0 < x < 4$, $0 < y < 2$), such as $Li_3N$, $SiS_2$-based glass ($Li_xSi_yS_z$, $0 < x < 3$, $0 <y < 2$, $0 < z < 4$), such as $Li_3PO_4$-$Li_2S$-$SiS_2$, and $P_2S_5$-based glass ($Li_xP_yS_z$, $0 < x < 3$, $0 < y < 3$, $0 < z < 7$), such as $LiI$-$Li_2S$-$P_2S_5$, or a mixture thereof.

Further, the inorganic particles may have an average diameter ($D_{50}$) of 10 nm to 5 $\mu$m. Meanwhile, when the particles have an average diameter ($D_{50}$) of less than 10 nm, the inorganic particles have an excessively large surface area to cause degradation of dispersibility of the inorganic particles in slurry for forming a porous coating layer during the preparation of the slurry. Meanwhile, as the particle diameter of the inorganic particles is increased, the mechanical properties of the separator may be degraded. Therefore, it is preferred that the particle diameter of the inorganic particles does not exceed 5 $\mu$m.

According to an embodiment of the present disclosure, the particle diameter ($D_{50}$) of the inorganic particles refers to an integrated value at 50% from the side of smaller particles calculated based on the results of determination of the particle size distribution of particles after classification using a particle size analyzer used conventionally in the art. Such particle size distribution can be determined by a diffraction or scattering intensity pattern generated upon the

contact of light with the particles. As a particle size distribution analyzer, Microtrac 9220FRA or Microtrac HRA available from Nikkiso may be used.

As described above, the separator according to the present disclosure includes a porous separator substrate including a polymer material. The separator substrate may be a porous film including a polymer resin, such as a porous polymer film made of a polyolefin material including polyethylene, polypropylene, or the like. The separator substrate may be molten at least partially, when the battery temperature is increased, and thus blocks the pores to induce shutdown. According to an embodiment of the present disclosure, the separator substrate may have a porosity of 40-70 vol%. Meanwhile, the pores of the separator substrate may have a diameter of about 10-70 nm based on the largest diameter of the pores. According to the present disclosure, the separator substrate may have a thickness of 5-14 $\mu$m with a view to thin filming and high energy density of an electrochemical device.

According to the present disclosure, the term 'porosity' means a volume occupied by pores based on the total volume of a structure, is expressed in the unit of percentage (%), and may be used exchangeably with the terms, such as pore ratio, porous degree, or the like. According to the present disclosure, the method for determining porosity is not particularly limited. According to an embodiment of the present disclosure, the porosity may be determined by the Brunauer-Emmett-Teller (BET) method using nitrogen gas or Hg porosimetry and according to ASTM D-2873. Further, the net density of a separator may be calculated from the density (apparent density) of the separator and the compositional ratio of ingredients comprised in the separator and density of each ingredient, and the porosity of the separator may be calculated from the difference between the apparent density and the net density.

Meanwhile, according to an embodiment of the present disclosure, the pore size, pore size distribution and mean pore size (nm) may be determined by using a capillary flow porometer. The capillary flow porometer is based on the process including wetting the pores of a separator with a liquid having a known surface tension, and applying pneumatic pressure thereto to measure the bubble point (max pore) where the initial flux is generated. Particular examples of the capillary flow porometer include CFP-1500-AE available from Porous Materials Co., or the like.

Meanwhile, according to an embodiment of the present disclosure, the separator substrate may further include at least one polymer resin selected from polyethylene terephthalate, polybutylene terephthalate, polyacetal, polyamide, polycarbonate, polyimide, polyetherether ketone, polyether sulfone, polyphenylene oxide, polyphenylene sulfide and polyethylene naphthalene, if necessary, for improving durability, or the like.

According to an embodiment of the present disclosure, the separator substrate may be a porous polymer film obtained by the method as described hereinafter, and may be a sheet of monolayer film or a multilayer film formed by lamination of two or more sheets. When two or more sheets are laminated, each layer preferably has the above-described characteristics in terms of its ingredients.

The methods for manufacturing the separator are not particularly limited, as long as the methods can provide the above-described structure.

According to an embodiment of the present disclosure, first, the binder resin, including the first binder resin and the second binder resin, and the inorganic particles are introduced to a suitable solvent to prepare slurry for forming a porous coating layer.

Meanwhile, according to an embodiment of the present disclosure, the slurry may further include a polymerization unit for forming the third binder resin. The polymerization unit may be controlled in such a manner that the content of the third binder resin in the finished separator may be 5 wt% based on 100 wt% of the total binder resin content. The content of the first binder resin and that of the second binder resin in the slurry may also be controlled in such a manner that the content of the first binder resin and that of the second binder resin in the finished separator may be within the above-defined ranges. When such polymerization units are further used, a radical initiator may be further used to carry out polymerization of the polymerization units.

According to the present disclosure, the radical initiator may be used in an amount of about 0.001-10 parts by weight based on 100 parts by weight of the content of the polymerization units comprised in the slurry. In addition, the radical initiator is not particularly limited, as long as it includes a thermal free radical initiator capable of inducing polymerization of the units at a predetermined temperature. Typical thermal free radical polymerization initiators that may be used for the present disclosure include organic peroxides, organic hydroperoxides and azo group-containing initiators, which generate free radicals. Particular examples of the organic peroxides include, but are not limited to: benzoyl peroxide, di-t-amyl peroxide, t-butyl peroxybenzoate, 2,5-dimethyl-2,5-di-(t-butylperoxy)hexane, 2,5-dimethyl-2,5-di-(t-butylperoxy)hexyn-3 and dicumyl peroxide. Particular examples of the organic hydroperoxides include, but are not limited to: t-amyl hydroperoxide and t-butyl hydroperoxide. Particular examples of the azo group-containing initiators include, but are not limited to: 2,2'-azobis(2,4-dimethylvaleronitrile), 2,2'-azobis(2,4-dimethylpentanenitrile), 2,2'-azobis(2-methylpropanenitrile), 2,2'-azobis(2-methylbutanenitrile) and 2,2'-azobis(cyclohexanecarbonitrile).

Then, the prepared slurry is applied to at least one surface of the polymer substrate, followed by drying. According to an embodiment of the present disclosure, the drying may be carried out by allowing the coated polymer substrate under a relative humidity of about 40-80% for a predetermined time so that the binder resin may be solidified. Herein, phase separation of the binder resin is induced. As the solvent migrates toward the surface portion of the inorganic

coating layer and the binder resin migrates toward the surface portion of the inorganic coating layer along with the migration of the solvent, the content of the binder resin is increased at the surface portion of the porous coating layer. Meanwhile, at the portion under the surface portion of the porous coating layer, pores are formed due to the interstitial volumes among the inorganic particles so that the porous coating layer may be provided with porous property.

According to an embodiment of the present disclosure, particular examples of the solvent may include at least one selected from acetone, methyl ethyl ketone, N-methyl pyrrolidone, polar amide solvent, such as dimethyl acetamide or diethyl formamide, C1-C4 alcohols, acetone, acetonitrile, benzene, 2-butanone, chlorobenzene, chloroform, cyclohexane, toluene, 1,2-dichloromethane (DMC), heptane and hexane. Meanwhile, considering the polymerization unit for the third binder resin, the solvent may be an organic solvent capable of dissolving the polymerization unit and having a boiling point of 120°C or lower. In this context, the solvent may include C1-C4 alcohols, acetone, acetonitrile, benzene, 2-butanone, chlorobenzene, chloroform, cyclohexane, toluene, 1,2-dichloromethane (DMC), heptane and hexane, and such solvents may be used alone or in combination, depending on the particular type of monomers used for polymerization.

Meanwhile, according to an embodiment of the present disclosure, when the polymerization unit for forming the third binder resin is further used, it is required to carry out the drying step at such a temperature that the thermal free radical polymerization initiator may initiate polymerization. The temperature may vary with the particular type of the thermal free radical polymerization initiator. In the following Examples, 2,2'-azobis(2,4-dimethylvaleronitrile) is used as an initiator. In this case, the drying temperature is controlled to 60-80°C. Meanwhile, according to an embodiment of the present disclosure, the drying temperature may be controlled to 100°C or lower, or 80°C or lower, in order to prevent deterioration of the ingredients used for manufacturing a separator. In this manner, the polymerization units comprised in the slurry are polymerized during the drying step so that the finished separator may include the third binder resin including the polymerization units.

Meanwhile, according to an embodiment of the present disclosure, the drying step may be carried out at a temperature of 60-80°C for the purpose of crosslinking of the polymerization units.

The slurry for forming a porous coating layer may be applied through a conventional coating process, such as Meyer bar coating, die coating, reverse roll coating, gravure coating, or the like. When forming the porous coating layers on both surfaces of the separator substrate, the coating solution may be applied to a single surface sequentially, and then humidified phase separation and drying may be carried out. However, it is preferred in terms of productivity that the coating solution is applied to both surfaces of the separator substrate at the same time, and then humidified phase separation and drying are carried out.

Since the polymerization unit for the third binder resin is used during the step of forming a porous coating layer, particularly, during the preparation of slurry for forming a porous coating layer, there is provided an effect of improving processability by reducing the problem of degradation of compatibility of the polymer resins, a decrease in dispersibility of slurry or an increase in viscosity. In addition, since the third binder resin is polymerized during the formation of a porous coating layer, the third binder resin may be bound to another binder resin or inorganic particles with a more densified structure, which is favorable to improvement of the adhesion, thermal stability and durability of the porous coating layer.

According to an embodiment of the present disclosure, the secondary battery includes: an electrode assembly including a negative electrode, a positive electrode and a separator interposed between the negative electrode and the positive electrode; and an electrolyte. The electrode assembly may be received in a battery casing, and the electrolyte may be injected thereto to provide a battery.

According to the present disclosure, the positive electrode includes a positive electrode current collector, and a positive electrode active material layer formed on at least one surface of the current collector and comprising a positive electrode active material, a conductive material and a binder resin. The positive electrode active material may include any one selected from: layered compounds, such as lithium manganese composite oxide ($LiMn_2O_4$, $LiMnO_2$, etc.), lithium cobalt oxide ($LiCoO_2$) and lithium nickel oxide ($LiNiO_2$), or those compounds substituted with one or more transition metals; lithium manganese oxides such as those represented by the chemical formula of $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); vanadium oxides such as LiVsOs, $LiV_3O_4$, $V_2O_5$ or $Cu_2V_2O_7$; Ni-site type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); $LiMn_2O_4$ in which Li is partially substituted with an alkaline earth metal ion; disulfide compounds; and $Fe_2(MoO_4)_3$; or a mixture of two or more of them.

According to the present disclosure, the negative electrode includes a negative electrode current collector, and a negative electrode active material layer formed on at least one surface of the current collector and comprising a negative electrode active material, a conductive material and a binder resin. The negative electrode may include, as a negative electrode active material, any one selected from: lithium metal oxide; carbon such as non-graphitizable carbon or graphite-based carbon; metal composite oxides, such as $Li_xFe_2O_3$ ($0 \leq x \leq 1$), $Li_xWO_2$ ($0 \leq x \leq 1$), $Sn_xMe_{1-x}Me'_yO_z$ (Me: Mn, Fe, Pb, Ge; Me': Al, B, P, Si, elements of Group 1, 2 or 3 in the Periodic Table, halogen; $0 < x \leq 1$; $1 \leq y \leq 3$;

1 ≤ z ≤ 8); lithium metal; lithium alloy; silicon-based alloy; tin-based alloy; metal oxides, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and BizOs; conductive polymers, such as polyacetylene; Li-Co-Ni type materials; and titanium oxide; or a mixture of two or more of them.

According to an embodiment of the present disclosure, the conductive material may be any one selected from the group consisting of graphite, carbon black, carbon fibers or metal fibers, metal powder, conductive whiskers, conductive metal oxides, activated carbon and polyphenylene derivatives, or a mixture of two or more of such conductive materials. More particularly, the conductive material may be any one selected from natural graphite, artificial graphite, Super-P, acetylene black, Ketjen black, channel black, furnace black, lamp black, thermal black, denka black, aluminum powder, nickel powder, zinc oxide, potassium titanate and titanium dioxide, or a mixture of two or more such conductive materials.

The current collector is not particularly limited, as long as it causes no chemical change in the corresponding battery and has high conductivity. Particular examples of the current collector may include stainless steel, copper, aluminum, nickel, titanium, baked carbon, aluminum or stainless steel surface-treated with carbon, nickel, titanium or silver, or the like.

The electrode binder resin may be a polymer used conventionally for an electrode in the art. Non-limiting examples of the binder resin include, but are not limited to: polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethylpolyvinylalchol, cyanoethyl cellulose, cyanoethyl sucrose, pullulan, and carboxymethyl cellulose.

According to the present disclosure, the electrolyte is a salt having a structure of $A^+B^-$, wherein $A^+$ includes an alkali metal cation such as $Li^+$, $Na^+$, $K^+$ or a combination thereof, and $B^-$ includes an anion such as $PF_6^-$, $BF_4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, $C(CF_2SO_2)_3^-$ or a combination thereof, the salt being dissolved or dissociated in an organic solvent selected from propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone ($\gamma$-butyrolactone), and mixtures thereof. However, the present disclosure is not limited thereto.

In addition, the present disclosure provides a battery module which includes a battery including the electrode assembly as a unit cell, a battery pack including the battery module, and a device including the battery pack as an electric power source. Particular examples of the device include, but are not limited to: power tools driven by the power of an electric motor; electric cars, including electric vehicles (EV), hybrid electric vehicles (HEV), plug-in hybrid electric vehicles (PHEV), or the like; electric two-wheeled vehicles, including E-bikes and E-scooters; electric golf carts; electric power storage systems; or the like.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

## [Examples]

### (1) Manufacture of Separator

#### Example 1

First, $Al_2O_3$ ($D_{50}$: 500 nm), PVAc (Mw: 150,000, Tg: 40°C), PMMA (Mw: 130,000, Tg: 116°C), trimethylolpropane triacrylate (TMPTA), 2,2'-azobis(2,4-dimethylvaleronitrile (polymerization initiator) and a dispersing agent (tannic acid) were introduced to acetone at a weight ratio of 80:16:2:1:0.05:1 to prepare slurry for forming a porous coating layer. Next, the slurry was applied onto a separator (polyethylene, porosity 45%, thickness 16 $\mu$m, air permeability 100 sec/100 cc) at a loading amount of 13.5 g/$m^2$ based on the area of the separator, followed by drying. The drying was carried out under a humidified conduction of a relative humidity of 45%, wherein the drying temperature was controlled to be maintained at 60-80°C. Then, the resultant product was cut into a size of 60 mm (length) x 25 mm (width) to obtain a separator. The resultant separator had a thickness of 25 $\mu$m.

#### Example 2

A separator was obtained in the same manner as Example 1, except that trimethylolpropane triacrylate (TMPTA) and 2,2'-azobis(2,4-dimethylvaleronitrile (polymerization initiator) were not used, and $Al_2O_3$, PVAc, PMMA and the dispersing agent were introduced to acetone at a weight ratio of 80:17:2: 1 to obtain slurry for forming a porous coating

layer, and the drying temperature was maintained at about 23°C. The scanning electron microscopic (SEM) image of the surface of the separator is shown in FIG. 4a.

**Example 3**

A separator was obtained in the same manner as Example 1, except that trimethylolpropane triacrylate (TMPTA) and 2,2'-azobis(2,4-dimethylvaleronitrile (polymerization initiator) were not used, and $Al_2O_3$, PVAc, PMMA and the dispersing agent were introduced to acetone at a weight ratio of 80:15:4: 1 to obtain slurry for forming a porous coating layer, and the drying temperature was maintained at about 23°C. The SEM image of the surface of the separator is shown in FIG. 4b.

**Example 4**

A separator was obtained in the same manner as Example 1, except that trimethylolpropane triacrylate (TMPTA) and 2,2'-azobis(2,4-dimethylvaleronitrile (polymerization initiator) were not used, and $Al_2O_3$, PVAc, PMMA and the dispersing agent were introduced to acetone at a weight ratio of 80:9.5:9.5:1 to obtain slurry for forming a porous coating layer, and the drying temperature was maintained at about 23°C. The SEM image of the surface of the separator is shown in FIG. 4c.

**Comparative Example 1**

First, $Al_2O_3$, PVdF-HFP (Mw: 400,000, Tm: 145°C), PVdF-CTFE (Mw: 400,000, Tm: 160°C) and a dispersing agent (tannic acid) were introduced to acetone at a weight ratio of 80:10:9:1 to obtain slurry for forming a porous coating layer. The resultant slurry was applied onto a separator (polyethylene, porosity 45%, thickness 16 $\mu$m) at a loading amount of 13.5 g/$m^2$ based on the area of the separator, followed by drying. The drying was carried out at 23°C under a humidified conduction of a relative humidity of 45%. Then, the resultant product was cut into a size of 60 mm (length) x 25 mm (width) to obtain a separator. The resultant separator had a thickness of 25 $\mu$m.

**Comparative Example 2**

First, $Al_2O_3$, PVAc and a dispersing agent (tannic acid) were introduced to acetone at a weight ratio of 80:19:1 to obtain slurry for forming a porous coating layer. The resultant slurry was applied onto a separator (polyethylene, porosity 45%, thickness 16 $\mu$m) at a loading amount of 13.5 g/$m^2$ based on the area of the separator, followed by drying. The drying was carried out at 23°C under a humidified conduction of a relative humidity of 45%. Then, the resultant product was cut into a size of 60 mm (length) x 25 mm (width) to obtain a separator.

**Comparative Example 3**

First, $Al_2O_3$, PMMA and a dispersing agent (tannic acid) were introduced to acetone at a weight ratio of 80:19:1 to obtain slurry for forming a porous coating layer. The resultant slurry was applied onto a separator (polyethylene, porosity 45%, thickness 16 $\mu$m) at a loading amount of 13.5 g/$m^2$ based on the area of the separator, followed by drying. The drying was carried out at 23°C under a humidified conduction of a relative humidity of 45%. Then, the resultant product was cut into a size of 60 mm (length) x 25 mm (width) to obtain a separator.

**Comparative Example 4**

First, $Al_2O_3$, PVAc, PMMA and a dispersing agent (tannic acid) were introduced to acetone at a weight ratio of 80:6:13:1 to obtain slurry for forming a porous coating layer. The resultant slurry was applied onto a separator (polyethylene, porosity 45%, thickness 16 $\mu$m) at a loading amount of 13.5 g/$m^2$ based on the area of the separator, followed by drying. The drying was carried out at 23°C under a humidified conduction of a relative humidity of 45%. Then, the resultant product was cut into a size of 60 mm (length) x 25 mm (width) to obtain a separator. The SEM image of the surface of the separator is shown in FIG. 4d.

**Comparative Example 5**

First, $Al_2O_3$ (D50: 500 nm), PVAc (Mw: 800,000, Tg: 40°C), PMMA (Mw: 130,000, Tg: 116°C), trimethylolpropane triacrylate (TMPTA), 2,2'-azobis(2,4-dimethylvaleronitrile (polymerization initiator) and a dispersing agent (tannic acid) were introduced to acetone at a weight ratio of 80:16:2:1:0.05: 1 to obtain slurry for forming a porous coating layer. Next,

the slurry was applied onto a separator (polyethylene, porosity 45%, thickness 16 μm, air permeability 100 sec/100 cc) at a loading amount of 13.5 g/m$^2$ based on the area of the separator, followed by drying. The drying was carried out under a humidified conduction of a relative humidity of 45%, wherein the drying temperature was controlled to be maintained at 60-80°C. Then, the resultant product was cut into a size of 60 mm (length) x 25 mm (width) to obtain a separator. The resultant separator had a thickness of 25 μm.

**(2) Manufacture of Electrode**

Natural graphite, SBR and CMC (weight ratio 90:9:1) were introduced to water to obtain negative electrode slurry. The negative electrode slurry was applied onto copper foil (thickness 10 μm) at a loading amount of 125 mg/cm$^2$, followed by drying. Then, the resultant structure was pressed to a thickness of 90 μm and cut into a size of 50 mm (length) x 25 mm (width) to obtain a negative electrode.

**(3) Determination of Adhesion to Electrode**

Each of the separators according to Examples and Comparative Examples was cut into a size of 60 mm (length) x 25 mm (width). The negative electrode prepared as described above was laminated with each separator by using a press at 60°C under 6.5 MPa to obtain a specimen. The obtained specimen was attached and fixed to a glass plate by using a double-sided adhesive tape in such a manner that the negative electrode might face the glass plate. Then, the separator portion of the specimen was peeled at 25°C and a rate of 300 mm/min with an angle of 180°, and the strength at this time was measured. The results of determination of the adhesion between the separator and the negative electrode is shown in the following Table 1 and FIG. 1. Meanwhile, five separator specimens obtained by the same method as described in Comparative Example 2 were prepared and peeled at 25°C and a rate of 300 mm/min with an angle of 180°, and the peel strength depending on distance was measured. The results are shown in the following Table 2 and FIG. 2.

**(4) Determination of Shrinkage of Separator**

Each of the separators according to Examples and Comparative Examples was allowed to stand at 130°C for 0.5 hours, and the shrinkage of each separator was determined. The shrinkage was obtained by marking two points optionally on the separator and calculating an increase/decrease in the interval (point interval) between the two points according to the following Formula 1. FIG. 3 show the photographic views illustrating the separators according to Examples 1 and 2, before and after the determination of the shrinkage. It can be seen from the results that the separators according to Examples 1 and 2 shows excellent shrinkage characteristics as determined by a shrinkage of 1% or less.

[Formula 1]

$$\text{Shrinkage (\%)} = \{(B-A)/A\} \times 100$$

In Formula 1, A is a point interval at the initial stage before each separator is allowed to stand at high temperature, and B is a point interval at the final stage after each separator is allowed to stand at high temperature.
The following Table 1 shows the results obtained from the above-described tests.

[Table 1]

| | Ex. 1 | Ex. 2 | Comp. Ex. 1 | Comp Ex. 2 | Comp. Ex. 3 | Comp. Ex. 4 | Comp. Ex. 5 |
|---|---|---|---|---|---|---|---|
| Ingredients and composition of | Polymer of | PVAc/PMMA | PVdF-HFP, PVdF- | PVAc | PMMA | PVAc/ PMMA | Polymer of |
| binder resin composition | PVAc/PMMA/TMPTA | (9:1, weight ratio) | CTFE | | | (2:8, weight ratio) | PVAc/PMMA/TMPTA |
| Thickness of separator (μm) | 25 | 25 | 25 | 25 | 25 | 25 | 25 |

(continued)

| binder resin composition | PVAc/PMMA/TMPTA | (9:1, weight ratio) | CTFE | | | (2:8, weight ratio) | PVAc/PMMA/TMPTA |
|---|---|---|---|---|---|---|---|
| Air permeability of separator (sec/100cc) | 350 | 240 | 300 | 264 | 220 | 189 | 455 |
| Adhesion of separator with negative electrode (N) | 1.898 | 1.270 | 0.857 | 0.048-1.192 | 0.053 | 0.292 | 0.283 |
| Heat shrinkage of separator (%) | 0 | 1 | 2 | 1 | 4 | 2 | 0 |

As can be seen from Table 1, the separators of Examples 1 and 2 according to the present disclosure ensure a level of air permeability applicable to a separator for an electrochemical device. In addition, the separators according to Examples 1 and 2 show improved adhesion to the electrode and improved heat shrinkage as compared to the separators according to Comparative Examples 1-5. Meanwhile, FIG. 3 shows the photographic images of the separator according to Example 1 before and after the evaluation of heat shrinkage. The separator according to Example 1 shows a shrinkage of 0% in both tests.

[Table 2]

| Specimen No. of Comp. Ex. 2 | Mean Force (N) |
|---|---|
| #1 | 1.192 |
| #2 | 0.285 |
| #3 | 0.048 |
| #4 | 0.815 |
| #5 | 1.084 |

Meanwhile, as can be seen from FIG. 2, separator specimen #1 to separator specimen #5 derived from the separator obtained from Comparative Example 2 shows low uniformity in terms of the adhesion depending on the distance of each specimen. In addition, as can be seen from the results of the mean force calculated from each specimen in Table 2, it is difficult to reproduce constant adhesion. Meanwhile, the SEM images of the separators according to Examples 2-4 and Comparative Example 4 are shown in FIG. 4a, FIG. 4b, FIG. 4c and FIG. 4d, respectively. It can be determined from the SEM images that as the content of PMMA is increased, phase separation of the binder resin composition toward the surface of the separator is deteriorated, and thus the content of the binder resin composition at the surface portion is low. Therefore, it can be seen from the results that an excessively high content of the second binder resin, such as PMMA, may cause degradation of the adhesion.

## Claims

**1.** A separator for an electrochemical device which comprises a porous separator substrate and a porous coating layer formed on the surface of the substrate,

wherein the porous coating layer comprises inorganic particles and a binder resin at a weight ratio of about 50:50-99: 1,
the binder resin includes a first binder resin and a second binder resin,
the first binder resin is an ethylenic polymer resin having a glass transition temperature (Tg) of 30-60°C and comprising a polar group, and
the second binder resin is an acrylic binder resin having a glass transition temperature (Tg) of 80-120°C.

**2.** The separator for an electrochemical device according to claim 1, wherein the binder resin further comprises a third binder resin, which is a polymer of a polymerization unit having at least one selected from acrylate, acetate and

nitrile groups.

3. The separator for an electrochemical device according to claim 1, wherein the first binder resin is present in an amount of 50-90 wt% based on 100 wt% of the binder resin, and the second binder resin is present in an amount of 10-50 wt% based on 100 wt% of the binder resin.

4. The separator for an electrochemical device according to claim 2, wherein the third binder resin is present in an amount of 7 wt% or less based on 100 wt% of the binder resin.

5. The separator for an electrochemical device according to claim 1, wherein the first polymer resin has a molecular weight (Mw) of 100,000-500,000 and comprises polyvinyl acetate (PVAc) represented by the following Chemical Formula 1:

[Chemical Formula 1]

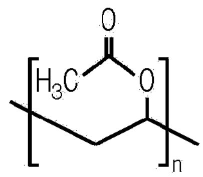

wherein n is an integer of 1 or more.

6. The separator for an electrochemical device according to claim 1, wherein the second polymer resin comprises polymethyl methacrylate (PMMA) represented by the following Chemical Formula 2:

[Chemical Formula 2]

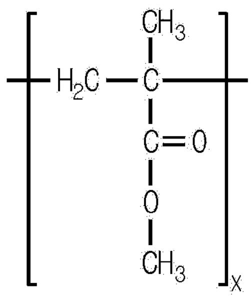

wherein x is an integer of 1 or more.

7. The separator for an electrochemical device according to claim 2, wherein the third binder resin is a polymer comprising trimethylolpropane triacrylate as a polymerization unit.

8. A separator for an electrochemical device which comprises a porous separator substrate and a porous coating layer formed on the surface of the substrate,

wherein the porous coating layer includes inorganic particles and a binder resin at a weight ratio of about 50:50-99:1,
the binder resin includes a first binder resin, a second binder resin and a third binder resin,
the first binder resin has a glass transition temperature (Tg) of 30-60°C and comprises polyvinyl acetate (PVAc),
the second binder resin has a glass transition temperature (Tg) of 80-120°C and comprises polymethyl methacrylate (PMMA), and
the third binder resin comprises a polymer comprising trimethylolpropane triacrylate as a polymerization unit.

9. An electrochemical device comprising a positive electrode, a negative electrode and a separator interposed between the positive electrode and the negative electrode, wherein the separator is the same as defined in any one of claims

1 to 8.

**10.** A lithium-ion secondary battery comprising the electrochemical device as defined in claim 9.

FIG. 1

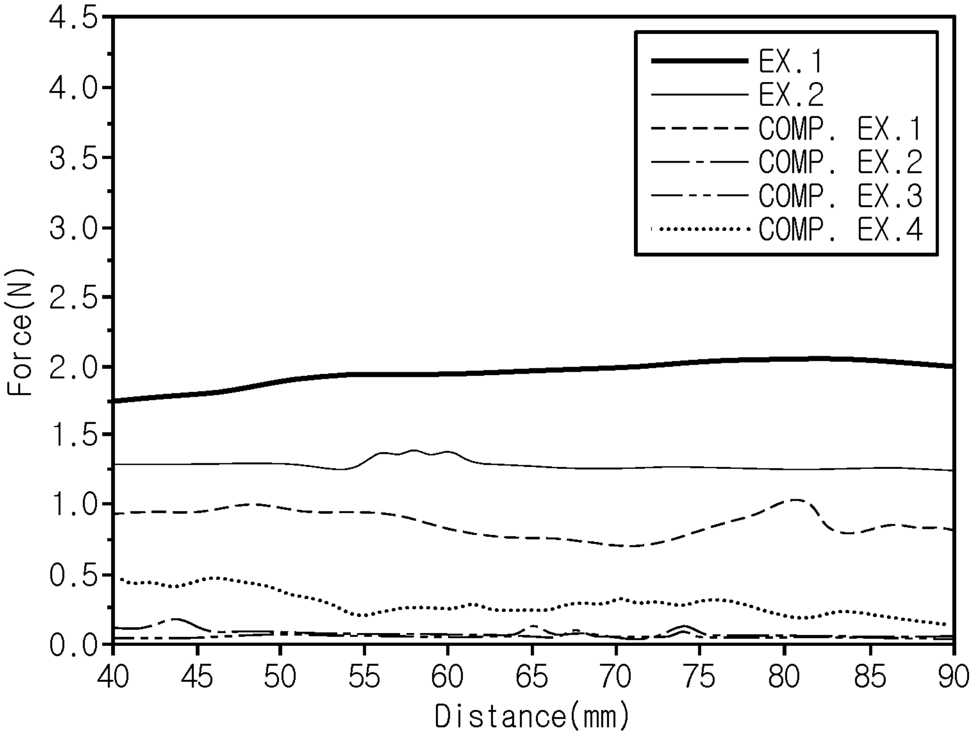
EX.1
EX.2
COMP. EX.1
COMP. EX.2
COMP. EX.3
COMP. EX.4
Force(N)
4.5
4.0
3.5
3.0
2.5
2.0
1.5
1.0
0.5
0.0
40
45
50
55
60
65
70
75
80
85
90
Distance(mm)

FIG. 2

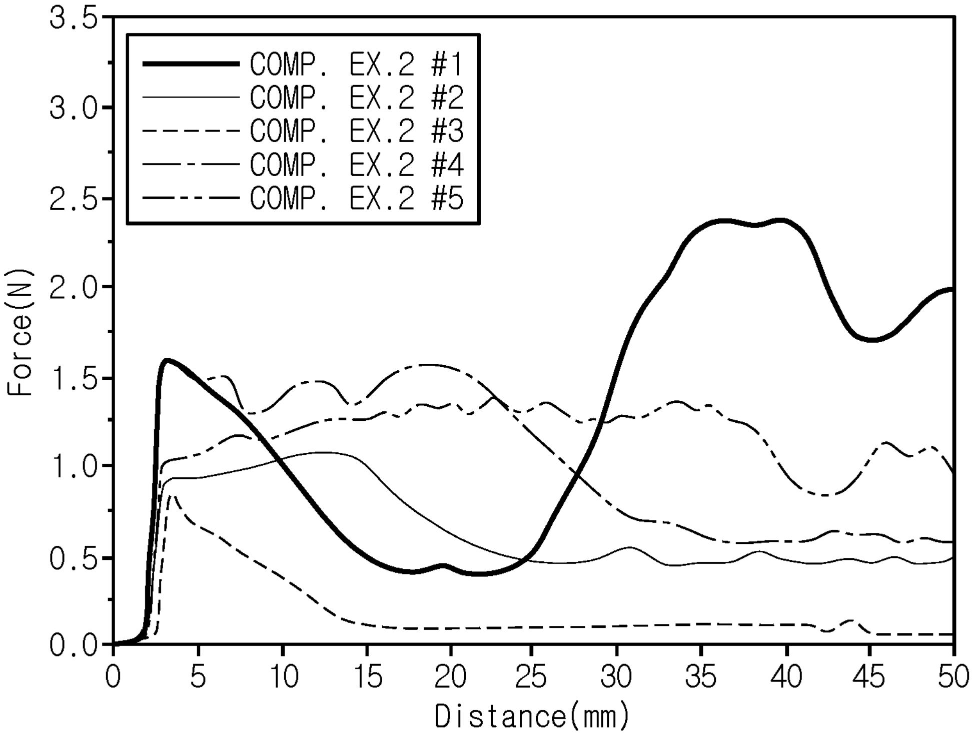
COMP. EX.2 #1
COMP. EX.2 #2
COMP. EX.2 #3
COMP. EX.2 #4
COMP. EX.2 #5
Force(N)
Distance(mm)
0.0
0.5
1.0
1.5
2.0
2.5
3.0
3.5
0
5
10
15
20
25
30
35
40
45
50

FIG. 3

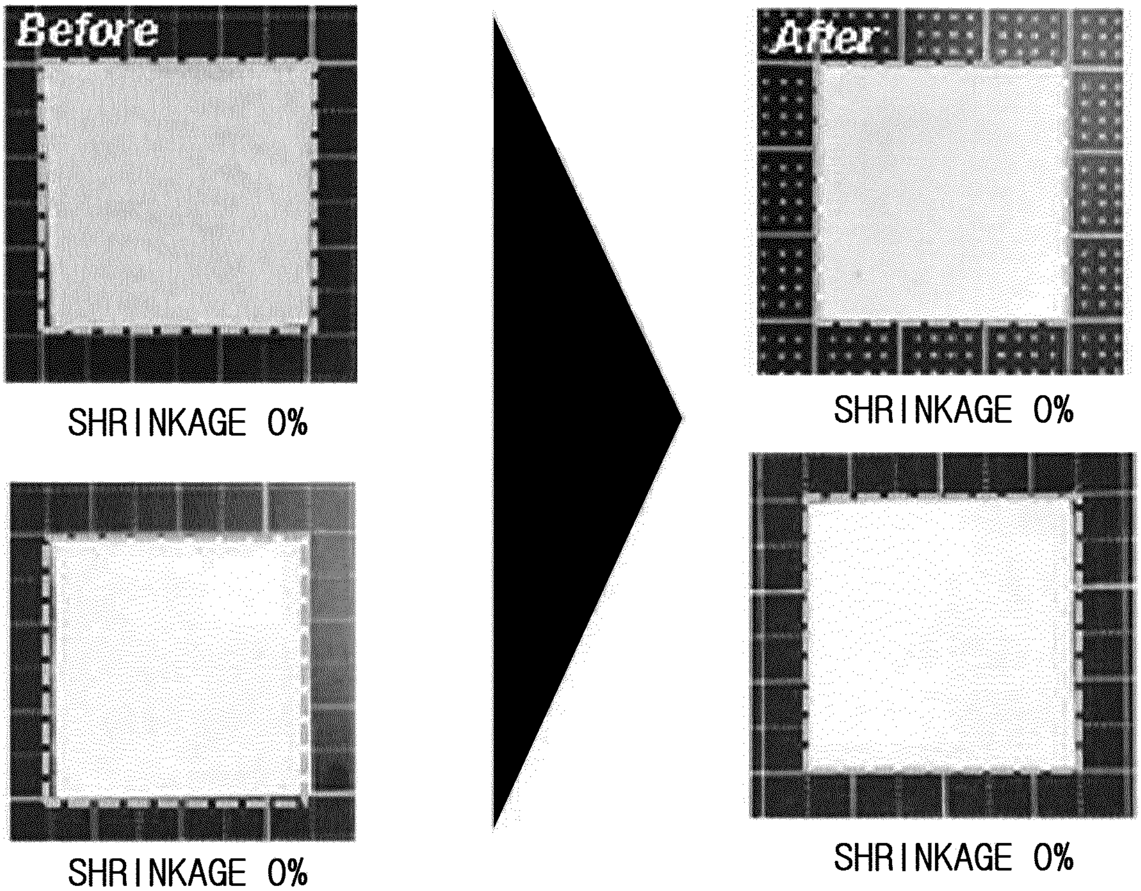
Before
SHRINKAGE 0%
SHRINKAGE 0%
After
SHRINKAGE 0%
SHRINKAGE 0%

FIG. 4a

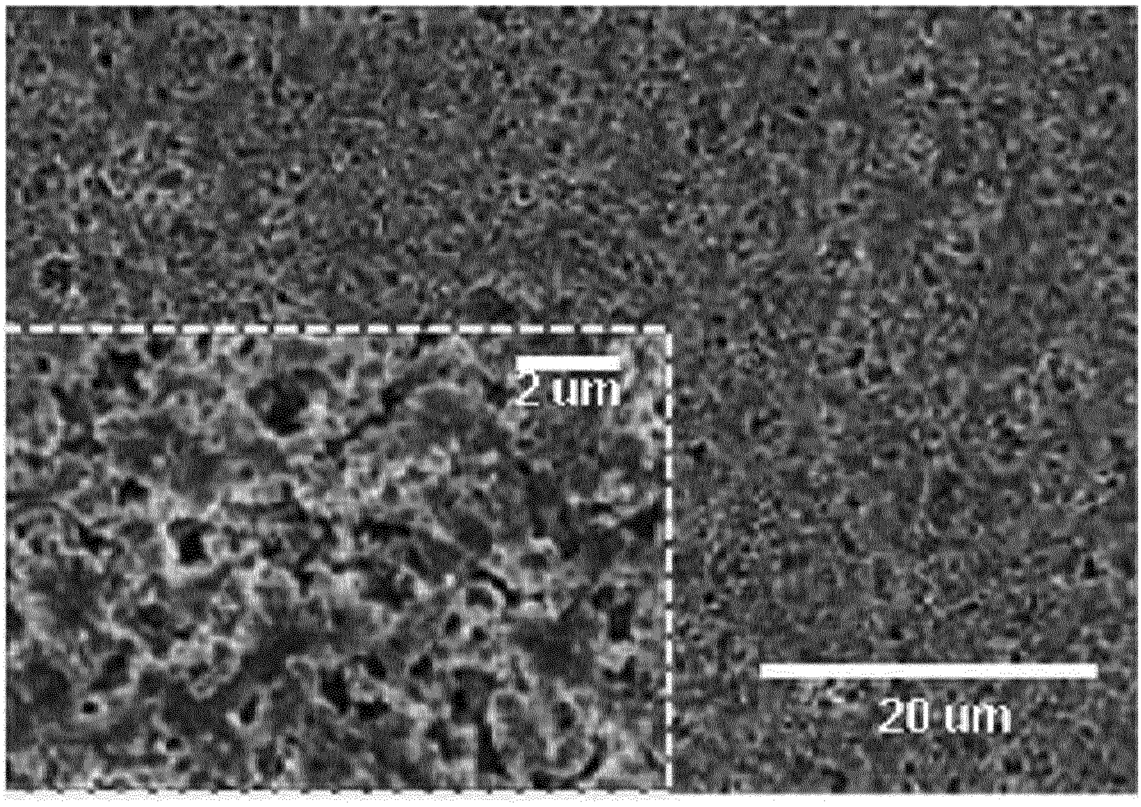

FIG. 4b

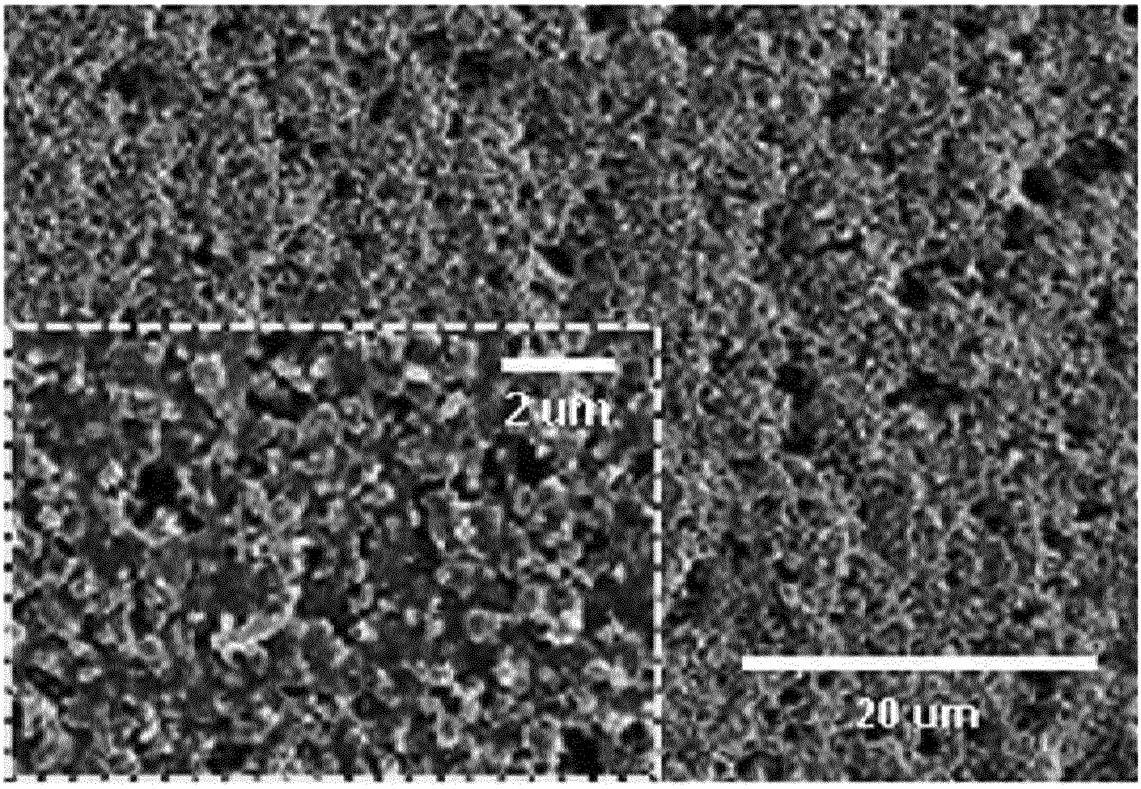

FIG. 4c

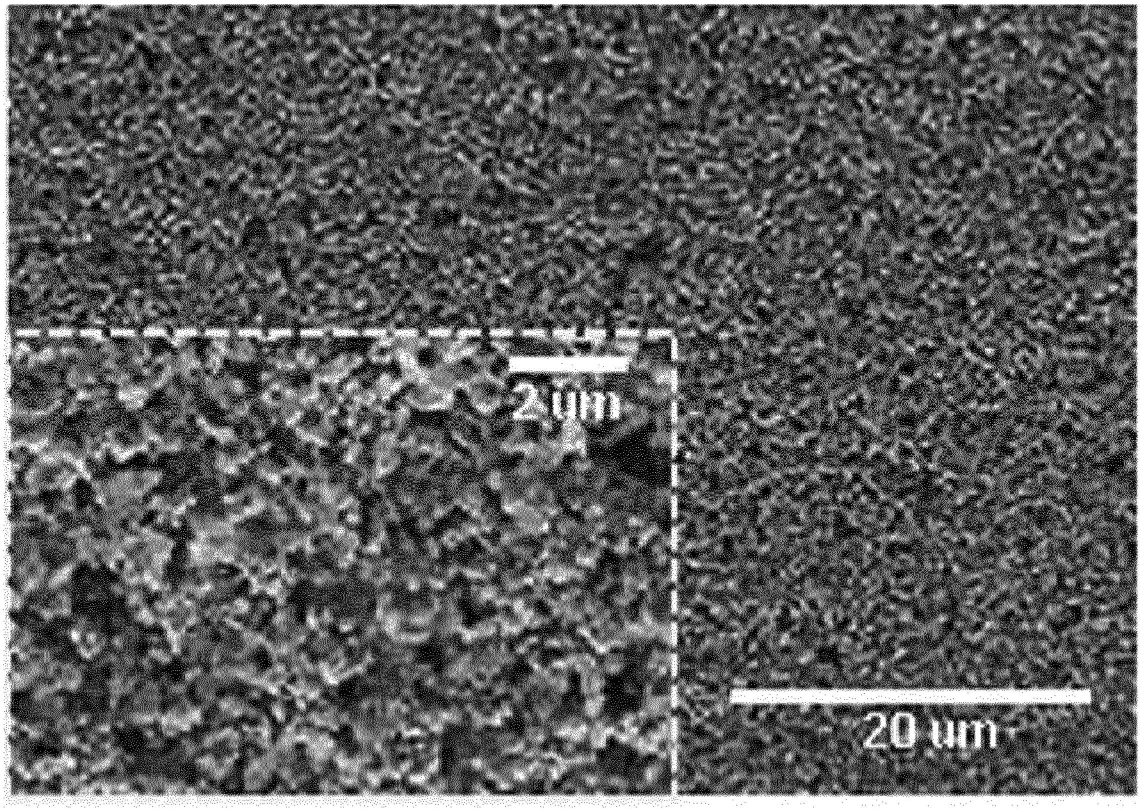

FIG. 4d

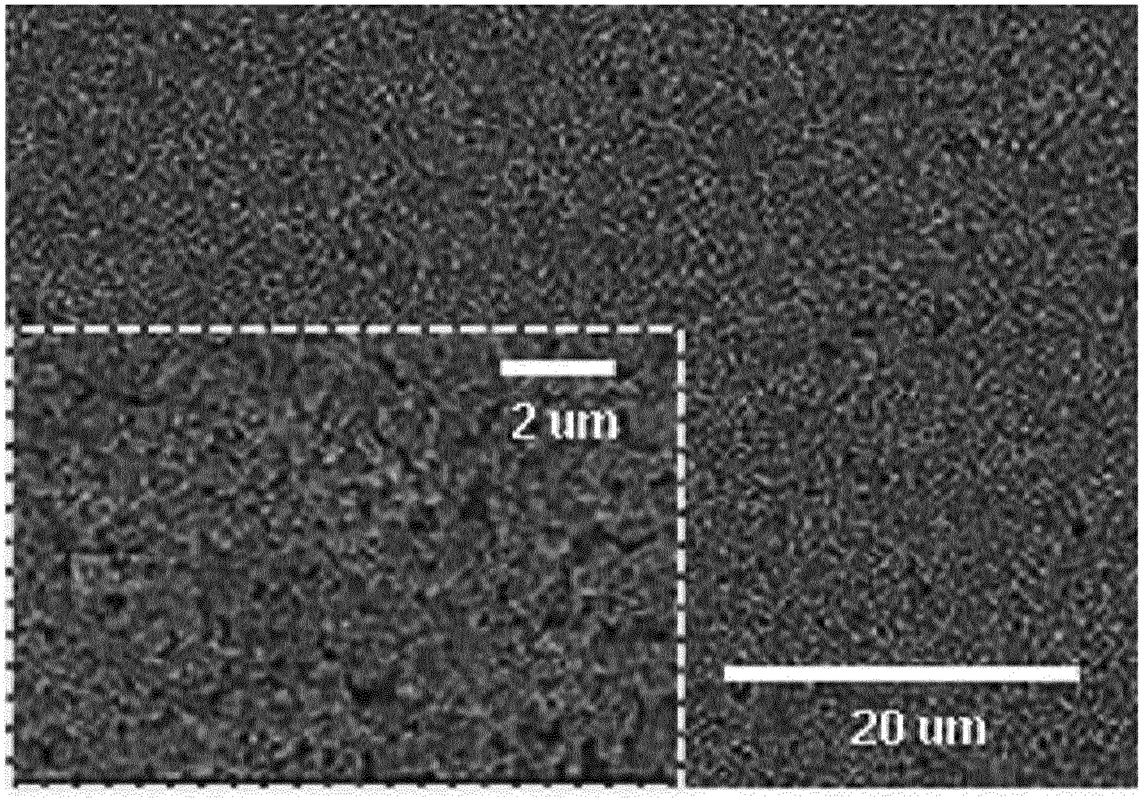

**INTERNATIONAL SEARCH REPORT**

International application No. **PCT/KR2021/004722**

**A. CLASSIFICATION OF SUBJECT MATTER**

**H01M 50/449**(2021.01)i; **H01M 50/446**(2021.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 50/449(2021.01); C08J 5/22(2006.01); C08J 7/04(2006.01); C08L 71/02(2006.01); H01G 11/52(2013.01); H01M 10/05(2010.01); H01M 2/14(2006.01); H01M 2/16(2006.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), Google & keywords: 다공성 분리막(porous separator), 코팅(coating), 무기물 입자(inorganic particle), 유리전이온도(Tg, glass transition temperature), 폴리비닐아세테이트(PVAc, polyvinyl acetate), 폴리메틸메타크릴레이트(PMMA, polymethyl methacrylate)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0034470 A (LG CHEM, LTD.) 31 March 2020 (2020-03-31)<br>See abstract; and claims 1-13. | 1-10 |
| Y | WO 2020-067778 A1 (LG CHEM, LTD.) 02 April 2020 (2020-04-02)<br>See paragraph [0026]; and claims 1, 3 and 7. | 1-10 |
| Y | KR 10-1551757 B1 (SAMSUNG SDI CO., LTD.) 10 September 2015 (2015-09-10)<br>See claims 1-5, 8, 22 and 23; and paragraphs [0020]-[0030] and [0041]. | 2,4,7,8 |
| Y | LEE, Y. M. et al. Electrochemical effect of coating layer on the separator based on PVdF and PE non-woven matrix. Journal of power sources. 2005, vol. 146, nos. 1-2, pp. 431-435.<br>See abstract; and page 431, right column. | 5 |
| Y | KR 10-2015-0063428 A (SEKISUI CHEMICAL CO., LTD.) 09 June 2015 (2015-06-09)<br>See claims 1, 5 and 10; and paragraphs [0129]-[0134]. | 2,4,7,8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 July 2021** | **19 July 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.
**PCT/KR2021/004722**

**C. DOCUMENTS CONSIDERED TO BE RELEVANT**

| Category* | Citation of document, with indication, where appropriate, of the relevant passages | Relevant to claim No. |
|---|---|---|
| Y | KR 10-2015-0084116 A (SK INNOVATION CO., LTD.) 22 July 2015 (2015-07-22)<br>See claims 1-16. | 5 |
| A | SOHN, J.-Y. et al. PVDF-HFP/PMMA-coated PE separator for lithium ion battery. Journal of Solid State Electrochemistry. 2012, vol. 16, no. 2, pp. 551-556.<br>See abstract; and page 551, right column. | 1-10 |
| A | KR 10-2015-0059621 A (SAMSUNG SDI CO., LTD.) 01 June 2015 (2015-06-01)<br>See claims 1-13. | 1-10 |
| A | KR 10-2006-0072065 A (LG CHEM, LTD.) 27 June 2006 (2006-06-27)<br>See claims 1-16. | 1-10 |

Form PCT/ISA/210 (second sheet) (July 2019)

**INTERNATIONAL SEARCH REPORT**
**Information on patent family members**

International application No.
**PCT/KR2021/004722**

| Patent document cited in search report | Publication date (day/month/year) | Patent family member(s) | Publication date (day/month/year) |
|---|---|---|---|
| KR 10-2020-0034470 A | 31 March 2020 | CN 111418088 A | 14 July 2020 |
| | | EP 3734701 A1 | 04 November 2020 |
| | | US 2021-0066692 A1 | 04 March 2021 |
| | | WO 2020-060310 A1 | 26 March 2020 |
| WO 2020-067778 A1 | 02 April 2020 | CN 112424991 A | 26 February 2021 |
| | | KR 10-2020-0036648 A | 07 April 2020 |
| KR 10-1551757 B1 | 10 September 2015 | CN 105733154 A | 06 July 2016 |
| | | CN 105733154 B | 15 December 2020 |
| | | EP 3041068 A1 | 06 July 2016 |
| | | EP 3041068 B1 | 23 October 2019 |
| | | JP 2016-127028 A | 11 July 2016 |
| | | KR 10-1674987 B1 | 10 November 2016 |
| | | US 10205147 B2 | 12 February 2019 |
| | | US 2016-0190537 A1 | 30 June 2016 |
| KR 10-2015-0063428 A | 09 June 2015 | CN 104781324 A | 15 July 2015 |
| | | EP 2918631 A1 | 16 September 2015 |
| | | JP 2015-083653 A | 30 April 2015 |
| | | JP 5593003 B1 | 17 September 2014 |
| | | KR 10-1559709 B1 | 12 October 2015 |
| | | RU 2015121358 A | 27 December 2016 |
| | | TW 201430021 A | 01 August 2014 |
| | | TW I500670 B | 21 September 2015 |
| | | US 2015-0303428 A1 | 22 October 2015 |
| | | WO 2014-073451 A1 | 15 May 2014 |
| KR 10-2015-0084116 A | 22 July 2015 | KR 10-2219691 B1 | 24 February 2021 |
| KR 10-2015-0059621 A | 01 June 2015 | KR 10-1690515 B1 | 29 December 2016 |
| | | KR 10-2015-0059622 A | 01 June 2015 |
| | | KR 10-2015-0106808 A | 22 September 2015 |
| | | KR 10-2015-0106809 A | 22 September 2015 |
| | | KR 10-2015-0106810 A | 22 September 2015 |
| | | KR 10-2015-0106811 A | 22 September 2015 |
| | | US 10020481 B2 | 10 July 2018 |
| | | US 10658641 B2 | 19 May 2020 |
| | | US 2016-0293923 A1 | 06 October 2016 |
| | | US 2016-0293999 A1 | 06 October 2016 |
| | | US 2016-0301055 A1 | 13 October 2016 |
| | | WO 2015-076571 A1 | 28 May 2015 |
| | | WO 2015-076573 A1 | 28 May 2015 |
| | | WO 2015-076574 A1 | 28 May 2015 |
| | | WO 2015-076575 A1 | 28 May 2015 |
| | | WO 2015-076602 A1 | 28 May 2015 |
| | | WO 2015-076611 A1 | 28 May 2015 |
| KR 10-2006-0072065 A | 27 June 2006 | BR PI0518118 A | 04 November 2008 |
| | | CA 2591941 A1 | 29 June 2006 |
| | | CA 2591941 C | 31 July 2012 |
| | | CN 101088183 A | 12 December 2007 |
| | | CN 101088183 B | 06 June 2012 |
| | | CN 102646802 A | 22 August 2012 |
| | | CY 1114997 T1 | 14 December 2016 |

Form PCT/ISA/210 (patent family annex) (July 2019)

**INTERNATIONAL SEARCH REPORT**
**Information on patent family members**

International application No.
**PCT/KR2021/004722**

| Patent document cited in search report | Publication date (day/month/year) | Patent family member(s) | Publication date (day/month/year) |
|---|---|---|---|
| | | CY 1115697 T1 | 25 January 2017 |
| | | DE 202005021948 U1 | 16 December 2011 |
| | | DE 202005022138 U1 | 04 September 2015 |
| | | DE 202005022139 U1 | 04 September 2015 |
| | | DK 1829139 T3 | 03 March 2014 |
| | | DK 2528141 T3 | 17 November 2014 |
| | | EP 1829139 A1 | 05 September 2007 |
| | | EP 1829139 B1 | 01 January 2014 |
| | | EP 2528139 A2 | 28 November 2012 |
| | | EP 2528139 A3 | 10 July 2013 |
| | | EP 2528140 A2 | 28 November 2012 |
| | | EP 2528140 A3 | 10 July 2013 |
| | | EP 2528141 A2 | 28 November 2012 |
| | | EP 2528141 A3 | 10 July 2013 |
| | | EP 2528141 B1 | 13 August 2014 |
| | | EP 2528142 A2 | 28 November 2012 |
| | | EP 2528142 A3 | 10 July 2013 |
| | | EP 2763210 A2 | 06 August 2014 |
| | | EP 2763210 A3 | 06 May 2015 |
| | | EP 2763211 A2 | 06 August 2014 |
| | | EP 2763211 A3 | 06 May 2015 |
| | | EP 3567655 A1 | 13 November 2019 |
| | | EP 3716360 A1 | 30 September 2020 |
| | | ES 2446440 T3 | 07 March 2014 |
| | | ES 2523828 T3 | 01 December 2014 |
| | | JP 2008-524824 A | 10 July 2008 |
| | | JP 2012-124183 A | 28 June 2012 |
| | | JP 2012-132023 A | 12 July 2012 |
| | | JP 2012-134177 A | 12 July 2012 |
| | | JP 2012-140015 A | 26 July 2012 |
| | | JP 2012-146677 A | 02 August 2012 |
| | | JP 2012-153897 A | 16 August 2012 |
| | | JP 2012-167280 A | 06 September 2012 |
| | | JP 2012-169284 A | 06 September 2012 |
| | | JP 2013-014142 A | 24 January 2013 |
| | | JP 2013-062257 A | 04 April 2013 |
| | | JP 2014-082216 A | 08 May 2014 |
| | | JP 2014-232730 A | 11 December 2014 |
| | | JP 5460962 B2 | 02 April 2014 |
| | | JP 5883762 B2 | 15 March 2016 |
| | | KR 10-0775310 B1 | 08 November 2007 |
| | | PL 1829139 T3 | 30 June 2014 |
| | | PL 2528141 T3 | 31 December 2014 |
| | | PT 1829139 E | 03 March 2014 |
| | | PT 2528141 E | 10 September 2014 |
| | | RU 2007128001 A | 27 January 2009 |
| | | RU 2364011 C2 | 10 August 2009 |
| | | SI 1829139 T1 | 31 March 2014 |
| | | SI 2528141 T1 | 30 October 2014 |
| | | SI EP1829139 T1 | 31 March 2014 |

Form PCT/ISA/210 (patent family annex) (July 2019)

**INTERNATIONAL SEARCH REPORT**
**Information on patent family members**

International application No.
**PCT/KR2021/004722**

| Patent document cited in search report | Publication date (day/month/year) | Patent family member(s) | | | Publication date (day/month/year) |
|---|---|---|---|---|---|
| | | SI | EP2528141 | T1 | 30 October 2014 |
| | | TW | 200640674 | A | 01 December 2006 |
| | | TW | I311102 | B | 21 June 2009 |
| | | US | 2009-0111025 | A1 | 30 April 2009 |
| | | US | 7662517 | B2 | 16 February 2010 |
| | | WO | 2006-068428 | A1 | 29 June 2006 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020200045488